# EUROPÄISCHE PATENTSCHRIFT

(11) **EP 2 999 930 B1**
(45) Veröffentlichungstag und Bekanntmachung des Hinweises auf die Patenterteilung: **27.09.2017**
(21) Anmeldenummer: 14752327.8
(22) Anmeldetag: 15.08.2014
(51) Int. Cl.: F24J 2/54, H01L 31/042

(54) **SONNEN-NACHFÜHRVORRICHTUNG FÜR SOLARMODULE MIT ELASTISCHEN BZW. FEDERNDEN PSEUDOGELENKEN**
SUN TRACKING DEVICE FOR SOLAR MODULES WITH ELASTIC OR RESILIENT PSEUDO-HINGES
DISPOSITIF DE SUIVI SOLAIRE POUR MODULES SOLAIRE MUNIS DE PSEUDO-ARTICULATIONS ÉLASTIQUES OU À RESSORT

(43) Veröffentlichungstag der Anmeldung: 30.03.2016
(73) Patentinhaber: Ophthalmosystem GmbH, 76646 Bruchsal (DE)
(72) Erfinder: ALAVI, Firouz, 76646 Bruchsal (DE)
(74) Vertreter: Lemcke, Brommer & Partner Patentanwälte Partnerschaft mbB
(86) Internationale Anmeldenummer: PCT/EP2014/067509
(87) Internationale Veröffentlichungsnummer: WO 2016/023595

(56) Entgegenhaltungen:
- EP-A1- 0 295 618
- EP-A1- 2 515 052
- EP-A1- 2 543 879
- EP-A2- 2 657 623
- WO-A1-2009/152343
- KR-A- 20110 102 706
- US-A1- 2007 204 860
- US-A1- 2008 011 288
- US-A1- 2011 208 326
- US-A1- 2013 008 431

## Beschreibung

Die Erfindung betrifft eine Nachführvorrichtung nach dem Oberbegriff des Anspruchs 1 für photovoltaische und solarthermische Wirkelemente oder dergleichen, umfassend: Aufstellmittel, welche dazu ausgebildet sind, wenigstens ein derartiges Wirkelement beabstandet vom einem Untergrund oder einer Oberfläche anzuordnen, und welche pfostenartig ausgebildet sind; über Gelenkmittel gelenkig mit den Aufstellmitteln verbundene Trägermittel für das Wirkelement, wobei die Gelenkmittel an einem oberen Ende der pfostenartigen Aufstellmittel angeordnet sind; und Bewegungsmittel, welche dazu ausgebildet sind, die Trägermittel relativ zu den Aufstellmitteln zu bewegen, vorzugsweise zu verschwenken, und welche wenigstens ein Verbindungsmittel sowie auf das Verbindungsmittel einwirkende Motormittel umfassen, welches Verbindungsmittel in wenigstens einem Befestigungspunkt auf einer den Aufstellmitteln zugewandten Seite der Trägermittel an den Trägermitteln fixiert ist, wobei die Motormittel zum Verändern eines Abstands zwischen den Aufstellmitteln und dem Befestigungspunkt auf das Verbindungsmittel einwirken, um eine möglichst optimale Ausrichtung der Wirkelemente (Solarmodule) zu erreichen. Die Gelenkmittel umfassen wenigstens ein Gelenkelement, welches Gelenkelement elastisch, vorzugsweise als Elastomerelement, als Stahl- oder Elastomerfeder, als Gummigelenk oder dergleichen ausgebildet ist.

Entsprechende Vorrichtungen sind beispielsweise aus der US 2008/011288 A1 und der US 2013/008431 A1 bekannt.

Außerdem betrifft die Erfindung eine Einrichtung zur solaren Energiegewinnung gemäß Anspruch 15.

Durch den Verfall der Weltmarktpreise insbesondere für photovoltaische Elemente besteht heute mehr denn je ein Anreiz dahingehend, im Alltag benötigte Energie kostengünstig und umweltfreundlich aus der reichlich auf der Erde eintreffenden Sonnenstrahlung zu gewinnen.

Dabei spielt es im Rahmen der Erfindung allerdings grundsätzlich keine Rolle, ob als Wirkelement ein photovoltaisches Element zum Umwandeln von Sonnenlichtstrahlung in elektrische Spannung, ein solarthermisches Element zum Erwärmen von Wasser oder dergleichen oder ein Reflektorelement nach Art eines Spiegels zur Anwendung kommt, um einfallendes Sonnenlicht einer weiteren Verwendung zuzuleiten. Alle vorstehend nicht abschließend aufgezählten Elemente zur Nutzung von Sonnenstrahlung werden im Rahmen dieser Beschreibung als "Wirkelemente" oder "solare Wirkelemente" bezeichnet.

Da der Sonnenstand und damit die Richtung der Sonneneinstrahlung sich an einem gegebenen Ort im Laufe des Tages verändert, ist es zur optimalen Nutzung der Sonnenstrahlung wünschenswert, das betreffende Wirkelement mit einer Nachführvorrichtung auszustatten, welche Nachführvorrichtung für eine zumindest im Wesentlichen optimale Ausrichtung des Wirkelements sorgt - vorzugsweise so, dass eine Einfallsrichtung der Sonnenstrahlung mit einer Flächennormalen des regelmäßig ebenen Wirkelements zusammenfällt.

Nach Erkenntnissen der Anmelderin lässt sich auf diese Weise der Wirkungsgrad eines solaren Wirkelements im photovoltaischen Bereich leicht um etwa 40 % erhöhen.

Derartige Nachführvorrichtungen für solare Wirkelemente sind grundsätzlich bekannt. Sie umfassen insbesondere die eingangs erwähnten Mittel zuzüglich aufwändiger Nachführmechanik und sind deshalb relativ teuer. In der Regel lassen sich die finanziellen Mehraufwendungen für derartige Nachführvorrichtungen im Betrieb des solaren Wirkelements nur schwer oder gar nicht amortisieren. Insbesondere in ärmeren Gegenden der Erde, welche jedoch oft über enormes solares Energiegewinnungspotential verfügen, scheidet der Einsatz derartiger, vorbekannter Nachführvorrichtungen schon aus Kostengründen in jedem Fall aus.

Aus der DE 10 2010 004 905 A1 ist ein Nachführsystem für Solarmodule bekannt, bei dem an der Spitze einer pfostenartigen Aufständerung ein sphärisches Gelenk angeordnet ist, mit dem ein Modulträger kippbar verbunden ist.

Nachteilig hieran ist, dass das eingesetzte sphärische Gelenk in aufwändiger Weise zusätzliche bauliche Maßnahmen erforderlich macht, um eine unkontrollierte Drehung des Solarmoduls zu verhindern.

Ähnlich verhält es sich beim Gegenstand der US 2013/0008489 U1.

Die DE 10 2007 020 235 A1 offenbart ein Nachführsystem mit einem einfachen Scharniergelenk, während die DE 10 2007 031 289 A1 ein relativ aufwändiges Kreuzgelenk für das Bewegen eines Reflektors/Absorbers zeigt.

Nachteilig bei den vorbekannten, gattungsgemäßen Vorrichtungen ist insbesondere, dass die dort eingesetzten Kreuzlager oder sphärischen Lager bzw. entsprechende Gelenke allein nur schwer Neigungen über 60° erreichen können. Auch mit einer Feder bzw. einem elastischen Gelenkelement allein lässt sich eine große Neigung nicht erreichen, weil der Träger (die Trägermittel) durch das hohe Eigen-/Nutzlasten-Gewicht vertikal instabil wird. Außerdem resultiert eine sehr hohe Beanspruchung der Feder.

Es besteht also Bedarf an einer Nachführvorrichtung der eingangs genannten Art, welche sich gegenüber vorbekannten, gattungsgemäßen Nachführvorrichtungen durch einen besonders einfachen sowie kostengünstigen Aufbau auszeichnet und deshalb ohne größeren finanziellen Aufwand zur Verbesserung der solaren Energiegewinnung einsetzbar ist. Insbesondere soll die zu erwartende Kostensteigerung durch Vorsehen einer erfindungsgemäßen Nachführvorrichtung so gering sein, dass eine Amortisierung durch den erreichbaren Mehrertrag möglich ist. Dabei sollen auch Neigungen der Trägermittel von über 60° bis 90° erreichbar sein.

Die Erfindung löst diese Aufgabe mittels einer Nachführvorrichtung mit den Merkmalen des Anspruchs 1 sowie mittels einer Energiegewinnungseinrichtung mit den Merkmalen des Anspruchs 15. Vorteilhafte Weiterbildungen der Erfindung sind jeweils Gegenstand von Unteransprüchen, deren Wortlaut hiermit durch ausdrückliche Bezugnahme in die Beschreibung aufgenommen wird.

Eine erfindungsgemäße Nachführvorrichtung für photovoltaische und solarthermische Wirkelemente oder dergleichen (vorliegend auch als "Solarmodule" bezeichnet) umfasst: Aufstellmittel, welche dazu ausgebildet sind, wenigstens ein derartiges Wirkelement beabstandet vom einem Untergrund oder einer Oberfläche anzuordnen, und welche pfostenartig ausgebildet sind; über Gelenkmittel gelenkig mit den Aufstellmitteln verbundene Trägermittel für das Wirkelement, wobei die Gelenkmittel an einem oberen Ende der pfostenartigen Aufstellmittel angeordnet sind; und Bewegungsmittel, welche dazu ausgebildet sind, die Trägermittel relativ zu den Aufstellmitteln zu bewegen, vorzugsweise zu verschwenken, und welche wenigstens ein Verbindungsmittel sowie auf das Verbindungsmittel einwirkende Motormittel umfassen, welches Verbindungsmittel in wenigstens einem Befestigungspunkt auf einer den Aufstellmitteln zugewandten Seite der Trägermittel an den Trägermitteln fixiert ist, wobei die Motormittel zum Verändern eines Abstands zwischen den Aufstellmitteln und dem Befestigungspunkt auf das Verbindungsmittel einwirken. Die erfindungsgemäße Nachführvorrichtung umfasst im Bereich der Gelenkmittel wenigstens ein Gelenkelement, welches Gelenkelement elastisch, vorzugsweise als Elastomerelement, als Stahl- oder Elastomerfeder, als Gummigelenk oder dergleichen ausgebildet ist. Sie zeichnet sich weiterhin dadurch aus, dass die Gelenkmittel zusätzlich zu dem wenigstens einen elastischen Gelenkelement ein klassisches Gelenk in Form eines Kreuz-, Dreh- oder Kugelgelenks oder dgl. umfassen, so dass eine Art "Kombigelenk" entsteht. Dadurch ist es insbesondere möglich, für die Trägermittel eine Neigung von bis zu 90° gegenüber der Horizontalen zu erreichen.

In diesem Zusammenhang hat es sich als besonders vorteilhaft erwiesen, dass die erfindungsgemäße Nachführvorrichtung Rückstellmittel für die Trägermittel aufweist, welche Rückstellmittel dafür sorgen, dass sich die Trägermittel mit dem Wirkelement nach Freigabe des Verbindungsmittels im Wesentlichen selbsttätig wieder in eine Ausgangsstellung zurückbewegen. Dies wird erfindungsgemäß dadurch erreicht, dass die Gelenkmittel nach Art eines Elastomer- oder Gummigelenks oder in Form eines Federmittels (Stahl- oder Elastomerfeder) oder dergleichen ausgebildet sind, was ein sogenanntes elastisches oder federndes "Pseudogelenk" darstellt, so dass die Gelenkmittel als elastische Gelenkmittel selbst für die genannte Rückstellkraft sorgen, sobald die Trägermittel aus ihrer Ausgangsposition herausbewegt werden. Auf separate Rückstellmittel kann dann verzichtet werden, was die Vorrichtung stark vereinfacht. Auch können auf diese Weise keine unkontrollierten Drehungen auftreten, wie von sphärischen Gelenken (Kugelgelenken) bekannt.

Die Erfindung ist jedoch keinesfalls auf die vorstehend erläuterten Ausgestaltungen insbesondere der Rückstellmittel bzw. der Gelenkmittel beschränkt. Zusätzlich ist auch ein aktives Zurückbewegen der Trägermittel in ihre Ausgangsstellung möglich, worauf weiter unten exemplarisch noch genauer eingegangen wird.

Im Zuge einer besonderen Weiterbildung kann bei der erfindungsgemäßen Nachführvorrichtung vorgesehen sein, dass zumindest das wenigstens eine elastische Gelenkelement mit wenigstens einem Schutzelement zusammenwirkt, welches Schutzelement dazu ausbildet und angeordnet ist, eine Drehung der Trägermittel um eine Längsachse der Gelenkmittel, insbesondere des wenigstens einen elastischen Gelenkelements, zu verhindern. Speziell kann das Schutzelement als ein das wenigstens eine elastische Gelenkelement umgebendes Schutzelement ausgebildet sein. Möglich ist insbesondere eine Ausbildung des Schutzelements als (Falten-)Balg, welcher das elastische Gelenkelement umgibt bzw. aufnimmt. Ein derartiges Schutzelement kann insbesondere auch bei dem vorstehend beschriebenen Kombigelenk zum Einsatz kommen.

Weiterhin kann in Wirkverbindung mit dem wenigstens einen elastischen Gelenkelement ein Vorspannmittel vorgesehen sein, welches Vorspannmittel dazu ausgebildet ist, eine Federwirkung des wenigstens einen elastischen Gelenkelements gezielt einzustellen bzw. zu dosieren. Dadurch lässt sich zudem eine verbesserte Stabilität der Anordnung erreichen. Das Vorspannmittel kann als Seil bzw. als biegeschlaffes Element ausgebildet sein. Es kann geeignete schraubbare Spannmittel umfassen. Wenn das elastische Gelenkelement speziell, jedoch ohne Beschränkung, als Schraubenfeder oder dgl. ausgebildet ist, kann das Vorspannmittel in deren Längsrichtung durch die Schraubenfeder hindurch geführt sein, um die Feder zusammenzuziehen. Vorzugsweise ist das Vorspannmittel einerseits an den Trägermitteln und andererseits an einer beliebigen ortsfesten Struktur, wie dem Erdboden, befestigt.

Eine erfindungsgemäße solare Energiegewinnungseinrichtung zeichnet sich dadurch aus, dass sie eine erfindungsgemäße Nachführvorrichtung und ein photovoltaisches oder solarthermisches Wirkelement oder dergleichen umfasst, welches Wirkelement über die Trägermittel mit der restlichen Nachführvorrichtung verbunden ist.

Die Bewegungsmittel einer erfindungsgemäßen Nachführvorrichtung umfassen somit wenigstens ein vorzugsweise biegeschlaffes Verbindungsmittel, welches vorteilhafterweise als (Stahl- oder Draht-)Seil, als Kette oder in anderer, geeigneter Weise ausgebildet sein kann. Weiterhin umfasst die Nachführvorrichtung auf das Verbindungsmittel einwirkende Motormittel, welche Motormittel reib-, kraft- und/oder formschlüssig mit dem Verbindungsmittel zusammenwirken können, beispielsweise durch Vorsehen geeigneter Reibräder bzw. Zahnräder oder dergleichen. Das Verbindungsmittel ist in dem wenigstens einen Befestigungspunkt auf einer den Aufstellmitteln zugewandten Seite der Trägermittel an den Trägermitteln festgelegt, vorzugsweise gelenkig, beispielsweise mittels einer Ösenverbindung oder dergleichen. Die Motormittel wirken zum Verändern eines Abstandes zwischen den Aufstellmitteln und dem Befestigungspunkt auf das Verbindungsmittel ein. Da der Befestigungspunkt an den Trägermitteln angeordnet ist, welche ihrerseits über die Gelenkmittel gelenkig mit den Aufstellmitteln verbunden sind, kommt es durch die erwähnte Abstandsänderung zwischen Aufstellmitteln und Befestigungspunkt zu einer Kipp- oder Schwenkbewegung der Trägermittel und somit des Wirkelements relativ zu den Aufstellmitteln, welche Bewegung durch die Gelenkmittel unterstützt bzw. überhaupt ermöglicht wird. Die genaue Form der Bewegung ergibt sich unter anderem aus der Art und Anzahl der verwendeten Gelenkmittel, der gewählten Lage des Befestigungspunkts sowie der Länge des Verbindungsmittels bzw. der Lage der Motormittel.

Wenn es sich bei dem Verbindungsmittel vorteilhafter Weise um ein biegeschlaffes Verbindungsmittel handelt, ist dieses durch die Motormittel zum Bewegen der Trägermittel grundsätzlich auf Zug zu belasten.

In diesem Zusammenhang kann in Weiterbildung der erfindungsgemäßen Nachführvorrichtung vorgesehen sein, dass die Motormittel zum Auf- und Abrollen eines Endes des Verbindungsmittels oder allgemein zum Verkürzen/Verlängern der Verbindungsmittels ausgebildet sind. Auf diese Weise lassen sich die Trägermittel bewegen, indem das Verbindungsmittel durch Wirkung der Motormittel auf eine Spule oder eine andere geeignete Einrichtung aufgerollt wird, so dass sich der genannte Abstand verringert. Durch anschließendes Abrollen des Verbindungsmittels können die Trägermittel wieder in ihre Ausgangsposition zurückbewegt werden.

Eine äußerst bevorzugte Weiterbildung der erfindungsgemäßen Nachführvorrichtung sieht vor, dass wenigstens zwei Verbindungsmittel vorhanden sind, die sich in ihrer Projektion auf eine Ebene der Trägermittel, welche regelmäßig parallel zu einer Ebene des Wirkelements orientiert ist, unter einem gewissen Winkel zueinander erstrecken. Dieser Winkel kann vorzugsweise im Wesentlichen 90° betragen. In diesem Zusammenhang ist weiterhin vorgesehen, dass die Motormittel entsprechend zum Einwirken auf wenigstens zwei Verbindungsmittel ausgebildet sind, indem beispielsweise eine entsprechende Mehrzahl an Motoreinheiten oder einer geeignete Getriebeanordnung vorgesehen ist. Auf diese Weise kann jeweils eine Motoreinheit auf jeweils ein Verbindungsmittel einwirken. Durch das Vorsehen mehrerer Verbindungsmittel in der genannten Art und Weise lassen sich auch komplexere Bewegungen der Nachführvorrichtung bzw. der Trägermittel ausführen, um den Wirkungsgrad der solaren Energiegewinnung noch stärker zu erhöhen.

Weiterhin kann vorgesehen sein, dass die wenigstens zwei Verbindungsmittel derart an den Trägermitteln angeordnet sind, dass sie sich in ihrer Projektion auf die Ebene der Trägermittel überkreuzen. Dadurch lässt sich eine erhöhte Drehstabilität in der Ebene des Trägers (der Trägermittel) erreichen.

Im Rahmen der vorliegenden Beschreibung bedeutet der Begriff "im Wesentlichen", dass die entsprechenden Merkmale bis auf übliche fertigungstechnische Abweichungen möglichst exakt realisiert sind.

Im Rahmen einer äußerst bevorzugten Weiterbildung der erfindungsgemäßen Nachführvorrichtung weisen die Aufstellmittel jeweils eine Führung für das oder die Verbindungsmittel auf, vorzugsweise in Form einer Öffnung oder eines Durchbruchs in den Aufstellmitteln, insbesondere wenn letztere in Form eines Pfostens ausgebildet sind. Vorzugsweise weist ein solcher Pfosten einen rechteckigen oder speziell quadratischen oder auch einen kreisförmigen bzw. ovalen Querschnitt auf, und die Öffnungen bzw. Durchbrüche zum Führen eines jeweiligen Verbindungsmittels erstrecken sich zwischen einander gegenüberliegenden Seitenflächen des Pfostens bzw. der Aufstellmittel. Wenn Öffnungen bzw. Durchbrüche für eine Mehrzahl von Verbindungsmitteln vorgesehen sind, sind diese vorzugsweise in Richtung einer Längserstreckung der Aufstellmittel (des Pfostens) versetzt zueinander angeordnet.

Um das oder die Verbindungsmittel zu schonen, kann im Zuge einer wieder anderen Weiterbildung der erfindungsgemäßen Nachführvorrichtung außerdem vorgesehen sein, dass die genannten Öffnungen oder Durchbrüche endständige Querschnitterweiterungen (Tulpen) aufweisen.

In diesem Zusammenhang sieht eine andere, äußerst vorteilhafte Weiterbildung der erfindungsgemäßen Nachführvorrichtung vor, dass das oder die Verbindungsmittel durch die betreffende Führung in den Aufstellmitteln hindurchgeführt und in einem jeweiligen zweiten Befestigungspunkt mit den Trägermitteln verbunden ist bzw. sind. Vorzugsweise sind die beiden Befestigungspunkte für jedes Verbindungsmittel symmetrisch bezüglich der Aufstellmittel bzw. der betreffenden Führung angeordnet.

In diesem Zusammenhang kann in Weiterbildung der Erfindung der erfindungsgemäßen Nachführvorrichtung weiterhin vorgesehen sein, dass die Motormittel zum Vorbeibewegen des Verbindungsmittels oder der Verbindungsmittel an einem Ort des jeweiligen Motorelements (der jeweiligen Motoreinheit) ausgebildet sind. Dabei sind die Motormittel weiterhin dazu ausgebildet, das oder die Verbindungsmittel gegen ein durch die Trägermittel und/oder die Gelenkmittel ausgeübtes Kippmoment festzulegen bzw. zu arretieren. Dieses Festlegen kann - wie bereits erwähnt - durch Reib-, Kraft- und/oder Formschluss erfolgen.

Wenn das oder die Verbindungsmittel in zwei Befestigungspunkten an den Trägermitteln festgelegt sind, lässt sich in einfacher Weise eine (aktive) Hin- und Her-Bewegung der Trägermittel bezüglich der Aufstellmittel erreichen, ohne dass es hierfür grundsätzlich auf die weiter oben beschriebene Rückstellkraft ankäme. Die angesprochene Festlegung gegenüber dem durch die Trägermittel und/oder die Gelenkmittel bzw. die Gewichtskraft des solaren Wirkelements ausgeübte Kippmoment dient insbesondere dazu, das oder die Verbindungsmittel definiert auf Spannung zu halten, um so eine definierte und dauerhafte Ausrichtung der Trägermittel bzw. des Wirkelements zu erreichen.

Eine wieder andere Weiterbildung der erfindungsgemäßen Nachführvorrichtung sieht vor, dass die Gelenkmittel eine Mehrzahl an Gelenkelementen aufweisen, welche vorzugsweise jeweils als Elastomergelenk, als Gummigelenk, als Federgelenk oder dergleichen ausgebildet sein können. Vorzugsweise sind in diesem Zusammenhang wenigstens eine gleiche Anzahl an Verbindungsmitteln vorgesehen, speziell ein Verbindungsmittel pro Gelenkelement, welche mehrere Verbindungsmittel höchst vorzugsweise parallel zu einander angeordnet sind. Auf diese Weise wird ein definiertes und sicheres Verschwenken der Trägermittel bzw. des solaren Wirkelements um eine Schwenkachse ermöglicht, welche durch die Geometrie der Anordnung der einzelnen Gelenkelemente definiert ist.

Eine wieder andere Weiterbildung der erfindungsgemäßen Nachführvorrichtung sieht vor, dass die Trägermittel als eine rückseitige Stützstruktur für das Wirkelement ausgebildet sind, vorzugsweise in Form einer Trägerplatte oder eines Tragrahmens. Grundsätzlich liegt es jedoch im Rahmen der Erfindung, dass die Trägermittel als Teil oder sogar als integraler Bestandteil des Wirkelements ausgebildet sind und die restliche Nachführvorrichtung in der beschriebenen Art und Weise ergänzen, indem sie Befestigungspunkte für das oder die Verbindungsmittel ausbilden bzw. vorsehen.

Es hat sich als äußerst vorteilhaft erwiesen, wenn die Motormittel im Rahmen einer weiteren Ausgestaltung der erfindungsgemäßen Nachführvorrichtung elektrisch betreibbar, das heißt in Form von Elektromotoren ausgebildet sind. Vorzugsweise sind die Motormittel unabhängig von einem Stromnetzanschluss betreibbar, insbesondere durch Vorsehen entsprechender elektrischer Energiespeicher, wie Akkumulatoren oder dergleichen.

Im Rahmen einer wieder anderen Weiterbildung kann die erfindungsgemäße Nachführvorrichtung außerdem eine Steuereinheit für die Motormittel aufweisen. Die genannte Steuereinheit ist vorzugsweise als programmtechnisch eingerichtete Steuereinheit (Prozessoreinheit) ausgebildet und dient höchst vorzugsweise dazu, die Trägermittel bzw. die solaren Wirkelemente kalendarisch bestimmt nach dem Sonnenstand auszurichten. Der Begriff "kalendarisch bestimmt" bedeutet in diesem Zusammenhang, dass die Tatsache ausgenutzt wird, wonach an einem gegebenen Ort auf der Erde in Abhängigkeit von einem kalendarisch bestimmten Datum (Tag und Uhrzeit) der Sonnenstand sehr genau bekannt bzw. berechenbar ist. Auf diese Weise kann auf das Vorsehen von aufwändigen Tracking-Einrichtungen oder dergleichen verzichtet werden, welche ansonsten die erfindungsgemäße Nachführvorrichtung entsprechend verteuern würden. Im Rahmen einer kalendarischen Bestimmung wird der Sonnenstand nicht aktiv detektiert, sondern aufgrund von kalendarischen Überlegungen als bekannt vorausgesetzt. Die Nachführung erfolgt dann durch die Steuereinheit gemäß der beschriebenen kalendarischen Bestimmung.

Eine erste Weiterbildung einer nicht erfindungsgemäßen Energiegewinnungseinrichtung sieht vor, dass in Wirkverbindung mit dem solaren Wirkelement ein Energiespeicher vorhanden ist. Hierbei kann es sich - je nach Art des Wirkelements - beispielsweise um einen Akkumulator oder eine andere Einrichtung zum Speichern elektrischer Energie oder um einen thermischen Energiespeicher handeln. Vorzugsweise dient der genannte Energiespeicher dazu, durch die Energiegewinnungseinrichtung bzw. das solare Wirkelement gewonnene Energie zum Betreiben der Nachführvorrichtung bereit zu stellen. Da sowohl die Motormittel als auch die Steuereinheit gemäß einer bevorzugten Ausgestaltung der erfindungsgemäßen Nachführvorrichtung elektrische Energie zum Betrieb benötigen, hat es sich als besonders vorteilhaft erwiesen, wenn der genannte Energiespeicher als Akkumulator ausgebildet ist. Die Energiegewinnungseinrichtung bzw. die Nachführvorrichtung sind auf diese Weise im Betrieb weitgehend autark; insbesondere ist es nicht erforderlich, in aufwändiger Weise einen Stromnetzanschluss zum Betreiben der Nachführvorrichtung bzw. der Energiegewinnungseinrichtung vorzusehen.

Eine andere Weiterbildung einer nicht erfindungsgemäßen Energiegewinnungseinrichtung sieht vor, dass diese weiterhin eine Netzeinspeisung umfasst, welche gegebenenfalls einen Wechselrichter oder dergleichen aufweisen kann, um die gewonnene Energie in ein Energie-Versorgungsnetz einspeisen zu können. Vorzugsweise findet sich bei diesem Energie-Versorgungsnetz um ein Stromnetz, wenn die Energiegewinnungseinrichtung mit einem photovoltaischen Wirkelement oder dergleichen ausgerüstet ist.

Schließlich sieht eine andere Weiterbildung einer nicht erfindungsgemäßen Energiegewinnungseinrichtung vor, dass diese zusätzlich eine Kommunikationsanbindung aufweist, über welche Kommunikationsanbindung steuerungstechnisch auf die Motormittel und/oder auf die Steuereinheit eingewirkt werden kann. Außerdem eignet sich die Kommunikationsanbindung zum Abfragen von Funktionsparametern des Wirkelements, beispielsweise zur Ermittlung einer gegenwärtig zur Verfügung gestellten Leistung. Die Kommunikationsanbindung kann kabelgebunden oder drahtlos ausgeführt sein, wobei eine drahtlose Ausführung kostenmäßige Vorteile mit sich bringt.

Durch Verwendung biegeschlaffer Verbindungsmittel in Wirkverbindung mit geeigneten Motor- oder Antriebsmitteln bzw. durch den Einsatz elastischer Gelenkelemente in Verbindung mit motorgetriebenen Verbindungsmitteln lässt sich in der gewünschten Weise eine besonders kostengünstige Ausgestaltung einer Nachführvorrichtung und einer hierauf aufbauenden Energiegewinnungseinrichtung realisieren.

Weitere Eigenschaften und Vorteile der vorliegenden Erfindung ergeben sich aus der nachfolgenden Beschreibung von Ausführungsbeispielen anhand der Zeichnungen.
- Figur 1: zeigt schematisch eine erste Ausgestaltung einer Energiegewinnungseinrichtung;
- Figur 2: zeigt ein Detail der Energiegewinnungseinrichtung aus Figur 1;
- Figur 3: zeigt die Energiegewinnungseinrichtung aus Figur 1 in einem verschwenkten Betriebszustand;
- Figur 4: zeigt eine Unteransicht der Energiegewinnungseinrichtung aus Figur 1;
- Figur 5: zeigt schematisch eine weitere Ausgestaltung einer Energiegewinnungseinrichtung;
- Figur 6: zeigt eine Unteransicht insbesondere der Energiegewinnungseinrichtung aus Figur 5;
- Figur 7: zeigt schematisch eine weitere Ausgestaltung einer Energiegewinnungseinrichtung;
- Figur 8: zeigt schematisch eine wieder andere Ausgestaltung einer Energiegewinnungseinrichtung bzw. einer entsprechenden Nachführvorrichtung;
- Figur 9: zeigt schematisch eine Ausgestaltung der Energiegewinnungseinrichtung mit stark verschwenkten Trägermitteln;
- Figur 10: zeigt schematisch eine erfindungsgemäße Energiegewinnungseinrichtung mit Kombigelenk zwecks verbesserter Verschwenkbarkeit der Trägermittel;
- Figur 11: zeigt schematisch in einer Ansicht von unten eine Energiegewinnungseinrichtung mit gekreuzten Verbindungsmitteln;
- Figur 12: zeigt die Energiegewinnungseinrichtung aus Figur 11 in einer Seitenansicht;
- Figur 13: zeigt schematisch eine Energiegewinnungseinrichtung mit einem Vorspannmittel zur Einstellung der Federwirkung;
- Figur 14: zeigt schematisch eine Ausgestaltung einer Energiegewinnungseinrichtung mit Schutzelement für das elastische Gelenkelement; und
- Figur 15: zeigt die Ausgestaltung gemäß Figur 14 in einem verschwenkten Zustand der Trägermittel.

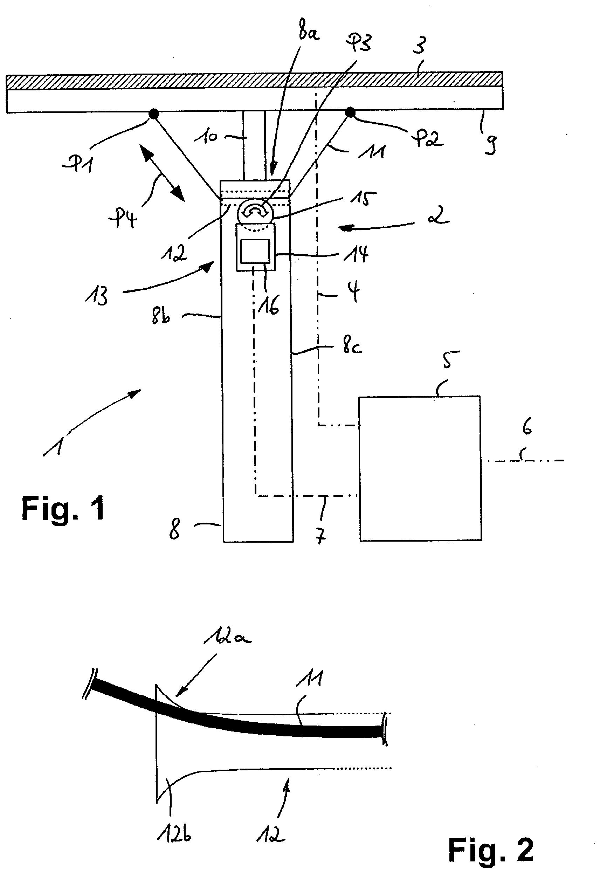

Figur 1 zeigt schematisch eine Energiegewinnungseinrichtung, welche in ihrer Gesamtheit mit dem Bezugszeichen 1 bezeichnet ist. Die Energiegewinnungseinrichtung 1 umfasst eine Nachführvorrichtung 2, auf deren Aufbau gleich genauer eingegangen werden soll, welche Nachführvorrichtung 2 zum Bewegen eines Photovoltaik-Moduls (photovoltaisches Wirkelement) 3 ausgebildet ist, welches Wirkelement 3 in Figur 1 durch ein schraffiertes, plattenförmiges Element symbolisiert ist. Das Wirkelement 3 steht über eine Leitung 4 in elektrischer Verbindung mit einem Energiespeicher 5, beispielsweise einem Akkumulator. Bei Bezugszeichen 6 ist eine Netzeinspeisung für die gewonnene elektrische Energie angedeutet; gegebenenfalls noch vorhandene Wechselrichter oder dergleichen sind nicht explizit mit eingezeichnet. Über eine weitere Leitung 7 ist der Energiespeicher 5 mit Bestandteilen der Nachführvorrichtung 2 elektrisch verbunden, um die Nachführvorrichtung 2 mit elektrischer Energie zu versorgen. Hierauf wird ebenfalls weiter unten noch genauer eingegangen.

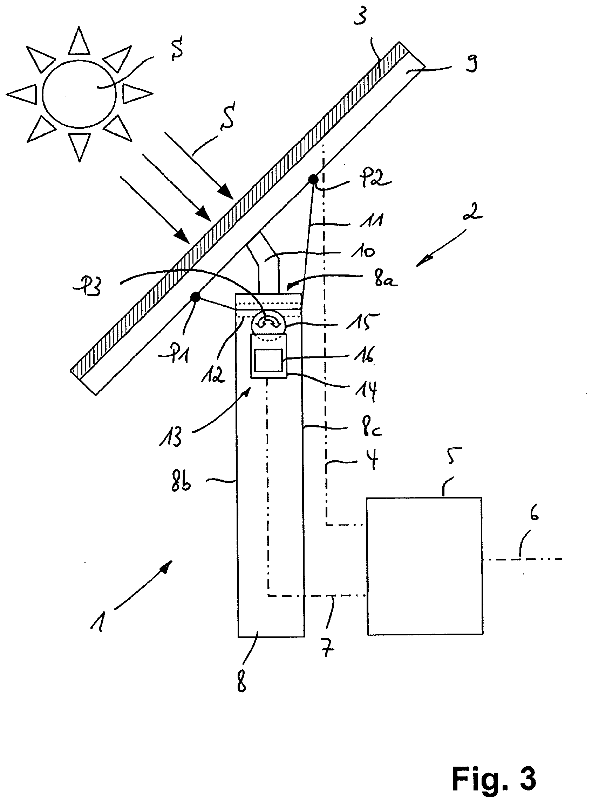

Die Nachführvorrichtung 2 umfasst zunächst pfostenartige Aufstellmittel 8 sowie Trägermittel 9, welche Trägermittel 9 auf der Rückseite des Wirkelements 3 angeordnet sind, um dieses zu halten. Die Trägermittel 9 können in Form einer Trägerplatte, eines Tragrahmens oder in sonstiger, geeigneter Weise ausgebildet sein. Zwischen einer Oberseite 8a der Aufstellmittel 8 und den Trägermitteln 9 sind Gelenkmittel 10 angeordnet, welche die Trägermittel 9 und die Aufstellmittel 8 gelenkig miteinander verbinden. Vorzugsweise sind die Gelenkmittel 10 in Form eines Feder- oder Elastomergelenks ausgebildet und sorgen für eine gelenkige Verbindung zwischen Trägermitteln 9 bzw. Wirkelement 3 einerseits und Aufstellmitteln 8 andererseits. Vorteilhafterweise geht die gelenkige Verbindung mit einer in Richtung der in Figur 1 gezeigten Ruhelage der Trägermittel 9 gerichteten Rückstellkraft einher, sobald die Trägermittel 9 aus der in Figur 1 gezeigten Ausgangs- oder Ruhelage heraus relativ zu den Aufstellmitteln 8 bewegt werden (vgl. Figur 3).

An einer den Aufstellmitteln 8 zugewandten Unterseite 9a der Trägermittel 9 befinden sich zwei Befestigungspunkte P1, P2 für ein biegeschlaffes Verbindungsmittel 11 in Form eines Stahlseils oder dergleichen. Das Verbindungsmittel 11 ist mit seinem einen Ende in Befestigungspunkt P1 und mit seinem anderen Ende in Befestigungspunkt P2 mit den Trägermitteln 9 gelenkig verbunden, beispielsweise mittels einer Schlaufen- oder Ösenverbindung. In diesem Zusammenhang kann die gelenkige Verbindung auch aufgrund der biegeschlaffen Ausgestaltung des Verbindungsmittels 11 selbst ausgebildet sein, während die Anbindung des Verbindungsmittels 11 an den Trägermitteln 9 im Bereich der Befestigungspunkte P1, P2 selbst nicht weiter gelenkig ausgeführt ist.

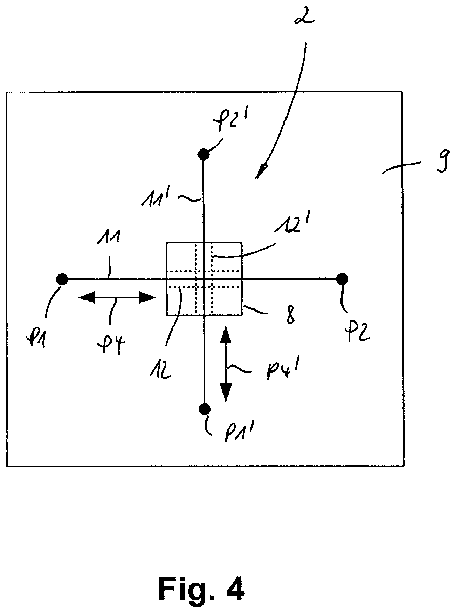

Das Verbindungsmittel 11 ist bei Bezugszeichen 12 im Bereich eines entsprechenden Durchbruchs durch die Aufstellmittel 8 hindurchgeführt, welcher Durchbruch 12 sich zwischen zwei einander gegenüberliegenden Seitenflächen 8b, 8c der Aufstellmittel 8 erstreckt, welche Aufstellmittel 8 hier speziell einen quadratischen Querschnitt aufweisen (vgl. Figur 4).

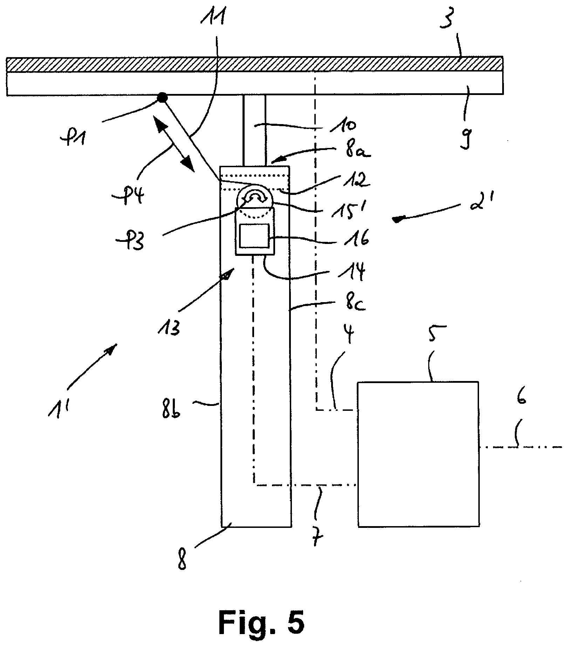

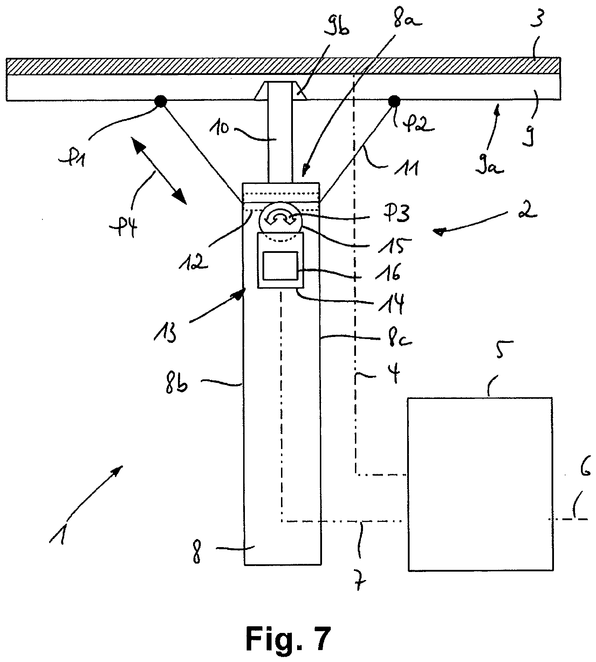

In den Figuren ist zur Vereinfachung der Darstellung die lichte Weite des Durchbruchs 12 übertrieben dargestellt; auch der Verlauf des Verbindungsmittels 11 im Bereich des Durchbruchs 12 ist in Figur 1, wie insbesondere auch in den Figuren 5 und 7, nur symbolisch dargestellt (vgl. Figur 2 für eine realistischere Darstellung). Im Bereich des Durchbruchs 12 wirkt das Verbindungsmittel 11 mit Motormitteln zusammen, welche Motormittel insgesamt mit dem Bezugszeichen 13 versehen sind. Die Motormittel 13 umfassen das eigentliche Motorelement bzw. die eigentliche Motoreinheit 14, welche vorliegend als Elektromotor ausgebildet ist. Die Motoreinheit 14 treibt ein Reibrad 15 an, welches Reibrad 15 Rotationsbewegungen gemäß dem Doppelpfeil P3 ausführt und dabei mit seinem Außenumfang reib- oder kraftschlüssig mit dem Verbindungsmittel 11 zusammenwirkt. Weiterhin umfassen die Motormittel 13 eine MotorSteuereinheit 16. Die Motormittel 13, d. h. insbesondere die Motoreinheit 14 und die Steuereinheit 16 werden über die Leitung 7 ausgehend von dem Energiespeicher 5 mit elektrischer Energie versorgt.

Die Motormittel 14 wirken über das Reibrad 15 derart mit dem Verbindungsmittel 11 im Bereich des Durchbruchs bzw. der Führung 12 zusammen, dass das Verbindungsmittel 11 - je nach Drehrichtung P3 des Reibrads 15 - gemäß dem Doppelpfeil P4 hin- und her bewegbar und außerdem in praktisch jeder beliebigen Stellung arretierbar ist. Entsprechend verändert sich ein Abstand der Befestigungspunkte P1, P2 bezüglich der Aufstellmittel 8, was zu einem Verkippen oder Verschwenken der Trägermittel 9 mit dem Wirkelement 3 führt, welches Verkippen bzw. Verschwenken durch die Gelenkmittel 10 ermöglicht wird (vgl. weiter unten Figur 3). Vorzugsweise erzeugen die Gelenkmittel 10 im verkippten Zustand der Trägermittel 9 bzw. des Wirkelements 3 eine Rückstellkraft in Richtung der in Figur 1 gezeigten Ausgangsstellung, welche Rückstellkraft mittels einer durch das Reibrad 15 vermittelten Haltekraft auf das Verbindungsmittel 11 kompensiert wird, um die Trägermittel 9 bzw. das Wirkelement 3 in der verkippten Stellung zu halten. Die Rückbewegung in die Ausgangsstellung gemäß Figur 1 kann auch durch Umkehren der Drehrichtung des Reibrads 15 bzw. der Motoreinheit 14 unterstützt werden. Dies alles geschieht nach Maßgabe durch die Steuereinheit 16, welche zu diesem Zweck vorzugsweise programmtechnisch eingerichtet ist. Insbesondere beinhaltet die Steuereinheit 16 Kalenderdaten und Positionsdaten (z. B. über GPS), welche Daten es ermöglichen, eine verkippte Stellung der Trägermittel 9 bzw. des Wirkelements 3 in Abhängigkeit von einem gegenwärtigen Datum und einer gegenwärtigen Uhrzeit einzustellen, um das Wirkelement 3 möglichst günstig im Hinblick auf den Sonnenstand auszurichten (vgl. Figur 3).

Damit es im Austrittsbereich des Verbindungsmittels 11 aus dem Durchbruch 12 zu keiner Beschädigung des Verbindungsmittels 11 kommt, sieht eine besondere Ausgestaltung gemäß Figur 2 vor, dass die Führung 12 in ihren endständigen Abschnitten 12a eine Tulpe, d. h. eine Querschnitterweiterung 12b aufweist, um das Verbindungsmittel 11 schonend zu führen, was in Figur 2 schematisch dargestellt ist.

Figur 3 zeigt die Energiegewinnungseinrichtung 1 in der bereits beschriebenen ausgelenkten bzw. verkippten Stellung der Trägermittel 9 bzw. des Wirkelements 3. Gleiche Bezugszeichen bezeichnen hier und in allen anderen Figuren gleiche oder zumindest gleichwirkende Elemente.

In Figur 3 ist deutlich die Abwinkelung im Bereich der Gelenkmittel 10 zu erkennen, welche in vorteilhafter Weise die bereits angesprochene Rückstellkraft in Richtung der Ausgangsstellung gemäß Figur 1 zur Folge hat. Gut zu erkennen ist in Figur 3 auch, wie sich der Abstand der Befestigungspunkte P1 und P2 bezogen auf die Aufstellmittel 8 verändert hat, weil das Verbindungsmittel 11 durch entsprechende Einwirkung der Motormittel 13 von links nach rechts durch die Führung 12 bewegt wurde. Das Reibrad 15 hält das Verbindungsmittel 11 im Bereich der Führung 12 gegen die Rückstellkraft der elastischen Gelenkmittel 10 in der gezeigten ausgelenkten Stellung.

Die Anordnung der Punkte P1 und P2 erfolgt möglichst derart, dass speziell bei der in Figur 3 gezeigten Verkippung das Verbindungsmittel (Seil) 11 keine vertikal abwärts gerichtete Verlaufskomponente aufweist.

Symbolisch sind in Figur 3 weiterhin die Sonne S und die ausgesandte Sonnenstrahlung S' dargestellt, wobei in der gezeigten Stellung gemäß Figur 3 die Sonnenstrahlen S' senkrecht, d. h. in Richtung einer Flächennormalen auf dem Wirkelement 3 auftreffen, was einen maximalen Wirkungsgrad des Wirkelements 3 zur Folge hat.

Um aus der in Figur 3 gezeigten Stellung in die Ausgangsstellung gemäß Figur 1 zurückzukehren, kann es unter Umständen bereits ausreichen, das Reibrad 15 teilweise freizugeben, woraufhin ein Kippmoment der Anordnung bzw. die Rückstellkraft der Gelenkmittel 10 für eine Rückbewegung der Trägermittel 9 bzw. des Wirkelements 3 in die Ausgangslage gemäß Figur 1 sorgt. Selbstverständlich kann die Rückbewegung durch die Motormittel 13 geeignet unterstützt werden (Umkehrung der Motor-Drehrichtung).

Aus Gründen der Übersichtlichkeit ist in den Figuren 1 und 3 nur ein Verbindungsmittel 11 dargestellt. Wie die Unteransicht der Trägermittel 9 gemäß Figur 4 zeigt, weist die Nachführvorrichtung 2 im oberen Bereich der Aufstellmittel 8 jedoch vorteilhafterweise zwei Führungen bzw. Durchbrüche 12, 12' für entsprechend zwei Verbindungsmittel 11, 11' auf, wobei die Führungen 12, 12' und die Verbindungsmittel 11, 11' jeweils orthogonal, d. h. unter einem Winkel von 90° bei der gezeigten Projektion auf die Unterseite 9a der Trägermittel 9 zueinander angeordnet sind. Dabei befinden sich die Durchbrüche 12, 12' auf unterschiedlichen Höhen bezüglich der Aufstellmittel 8, so dass die Verbindungsmittel 11, 11' im Betrieb nicht miteinander kollidieren. Die Motormittel sind in Figur 4 aus Gründen der Übersichtlichkeit nicht eingezeichnet; grundsätzlich kann für jedes Verbindungsmittel 11, 11' ein eigenes Motorelement vorhanden sein. Es ist auch möglich, zum Einwirken auf beide Verbindungsmittel 11, 11' nur eine gemeinsame Motoreinheit vorzusehen, welche dann über eine geeignete Getriebeanordnung auf jeweils ein Reibrad für jedes der Verbindungsmittel 11, 11' einwirkt.

Die Bewegung der Verbindungsmittel 11, 11' erfolgt gemäß Figur 4 entsprechend den Pfeilen P4 bzw. P4', wie weiter oben anhand von Figur 1 und Figur 3 für das Verbindungsmittel 11 beschrieben. Auf diese Weise lassen sich auch komplexere Nachführbewegungen realisieren, weil mehr als eine Kipp- bzw. Schwenkachse zur Verfügung steht.

Grundsätzlich ist die Erfindung nicht auf eine bestimmte Anzahl von Verbindungsmitteln 11, 11' bzw. auf bestimmte Winkelanordnungen der Verbindungsmittel relativ zueinander beschränkt.

Vorzugsweise besitzen alle Durchbrüche oder Führungen 12, 12', insbesondere gemäß Figur 4, an ihren offenen Enden eine tulpenförmige Ausgestaltung gemäß Figur 2, um die eingesetzten Verbindungsmittel 11, 11' zu schonen.

Figur 5 zeigt eine alternative Ausgestaltung der Energiegewinnungseinrichtung bzw. der Nachführvorrichtung, welche in Figur 5 mit den Bezugszeichen 1' bzw. 2' bezeichnet sind. Abweichend von der Ausgestaltung in den Figuren 1 und 3 ist anstelle eines Reibrads im Zusammenhang mit den Motormitteln 13 eine Spule 15' vorgesehen, welche gemäß dem Doppelpfeil P3 durch die Motoreinheit 14 nach Maßgabe der Steuereinheit 16 drehbar ist. Die Spule 15' dient zum Aufwickeln desjenigen Endes des Verbindungsmittels 11, welches nicht in Befestigungspunkt P1 in der beschriebenen Art und Weise an den Trägermitteln 9 befestigt ist.

Auf diese Weise wird durch Auf- bzw. Abwickeln des Verbindungsmittels 11 auf die bzw. von der Spule 15' die Bewegung des Verbindungsmittels 11 gemäß Doppelpfeil P4 bewirkt, was wiederum zu einem Verkippen oder Verschwenken der Trägermittel 9 mit dem Wirkelement 3 führt. Dabei ruft vorzugsweise ein Aufwickeln des Verbindungsmittels 11 auf die Spule 15' neben dem angesprochenen Verkippen des Trägermittel 9 mit dem Wirkelement 3 über die Auslenkung der Gelenkmittel 10 (vgl. Figur 3) eine Rückstellkraft in die Ausgangslage gemäß Figur 5 hervor, so dass anschließend durch Freigeben der Spule 15' sich die Trägermittel 9 mit dem Wirkelement 3 quasi selbsttätig wieder in die Stellung gemäß Figur 5 zurückbewegen.

Selbstverständlich ist es auch möglich, eine weitere Spule analog 15' und ein weiteres Verbindungsmittel (nicht gezeigt) vorzusehen, welches weitere Verbindungsmittel analog zu dem Verbindungsmittel 11 gemäß Figur 1 oder Figur 3 in einem weiteren Befestigungspunkt analog P2 an den Trägermitteln 9 befestigt ist. Auf diese Weise ließe sich durch Auf- bzw. Abwickeln des genannten weiteren Verbindungsmittels die Rückbewegung in die Ausgangsstellung gemäß Figur 5 aktiv bewirken.

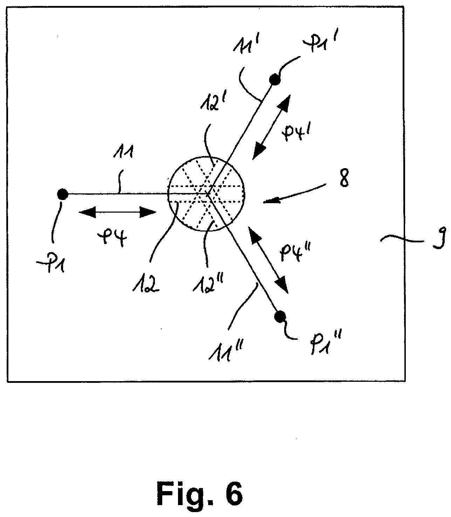

Wie die Unteransicht gemäß Figur 6 zeigt, können in Weiterbildung der Ausgestaltung gemäß Figur 5 drei Führungen 12, 12', 12" und entsprechende Verbindungsmittel 11, 11', 11" vorgesehen sein, die unter einem relativen Winkel von 120° angeordnet sind, wobei aus Gründen der Übersichtlichkeit auf die Darstellung der entsprechenden Motormittel bzw. Spulen verzichtet wurde. Durch Auf- bzw. Abwickeln des Verbindungsmittels 11 und/oder des Verbindungsmittels 11' und/oder des Verbindungsmittels 11" lassen sich somit wiederum komplexere Bewegungsformen der Trägermittel 9 bzw. des darauf befindlichen Wirkelements (in Figur 6 nicht gezeigt) erreichen. Die Aufstellmittel (Pfosten) 8 weisen speziell und ohne Beschränkung einen kreisförmigen Querschnitt auf.

Wie bereits angedeutet, können auch bei der Ausgestaltung gemäß Figur 6 noch weitere Verbindungsmittel und zugeordnete Motormittel vorhanden sein, wobei sich die genannten weiteren Verbindungsmittel vorzugsweise in Verlängerung der gezeigten Verbindungsmittel 11 bzw. 11' bzw. 11" erstrecken würden, um die Rückbewegung in die Ausgangsstellung gemäß Figur 5 aktiv bewirken zu können.

Angemerkt sei noch, dass auch die Ausgestaltung gemäß Figur 4 selbstverständlich nicht auf eine rechtwinklige Relativanordnung der dort gezeigten Verbindungsmittel bzw. auf das Vorsehen von genau zwei solchen Verbindungsmitteln beschränkt ist, vgl. Figur 6.

Figur 7 zeigt eine weitere Ausgestaltung der Energiegewinnungseinrichtung 1 bzw. der Nachführvorrichtung 2, welche größtenteils der Ausgestaltung in Figur 1 bzw. Figur 3 entspricht. Bemerkenswert ist allerdings, dass die Gelenkmittel 10 sich ausgehend von der Oberseite 8a der Aufstellmittel 8 in den Bereich einer Vertiefung 9b an der Unterseite 9a der Trägermittel 9 erstrecken. Dies hat den Vorteil, dass beim Verschwenken bzw. beim Verkippen der Trägermittel 9 mit dem Wirkelement 3 (vgl. Figur 3) ein seitlicher Abstand der Trägermittel 9 von den Aufstellmitteln 8 reduziert werden kann, was sich günstig auf die herrschenden Kräfteverhältnisse auswirkt. Insbesondere kann es auf diese Weise leichter fallen, die Trägermittel 9 bzw. das Wirkelement 3 in die Ausgangsstellung gemäß Figur 7 zurückzubewegen.

Wie der Fachmann leicht erkennt, kann die Ausgestaltung gemäß Figur 7 sowohl mit der grundsätzlichen Ausgestaltung der Energiegewinnungseinrichtung 1 gemäß Figur 1 und Figur 3 als auch mit der grundsätzlichen Ausgestaltung der Energiegewinnungseinrichtung 1' gemäß Figur 5 zum Einsatz kommen.

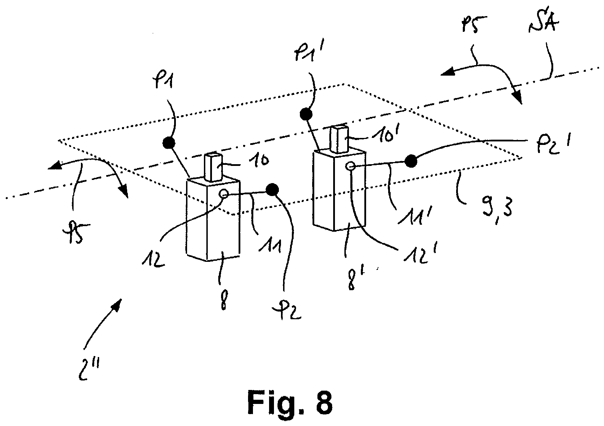

Schließlich zeigt Figur 8 schematisch noch eine weitere Ausgestaltung zumindest der Nachführvorrichtung, welche hier mit dem Bezugszeichen 2" bezeichnet ist.

Hierbei sind zwei pfostenartige Aufstellmittel 8, 8' vorgesehen, die an ihrer jeweiligen Oberseite Gelenkmittel 10, 10' aufweisen. Im Bereich jeweiliger Durchbrüche bzw. Führungen 12, 12' erstrecken sich - zwischen Befestigungspunkten P1, P2 bzw. P1' bzw. P2' - jeweilige Verbindungsmittel 11, 11'. Dabei verlaufen die Verbindungsmittel 11, 11' zueinander parallel, was Schwenk- bzw. Kippbewegungen der Trägermittel 9 zusammen mit Wirkelement 3 um eine Schwenkachse SA (strichpunktiert gezeichnet) ermöglicht. Dies ist in Figur 8 mittels der Doppelpfeile P5 symbolisiert. Speziell bei dieser Ausgestaltung müssen die Verbindungsmittel nicht zwingend als biegeschlaffe Elemente ausgeführt sein. Auch eine starre Ausführung ist möglich und grundsätzlich nicht auf die Ausgestaltung gemäß Figur 8 beschränkt.

Auf diese Weise existiert zwar nur eine Schwenkachse SA, insbesondere im Gegensatz zu den zwei Schwenkachsen gemäß Figur 4 oder Figur 6, jedoch ist die Stabilität der Anordnung deutlich erhöht.

Es sei an dieser Stelle angemerkt, dass selbst eine Einachs-Nachführung hinsichtlich des erreichbaren Wirkungsgrades deutliche Vorteile gegenüber starr montierten Wirkelementen 3 bietet.

Selbstverständlich ist die grundsätzliche Ausgestaltung gemäß Figur 8 nicht auf das Vorsehen von zwei Aufstellmitteln 8, 8' mit entsprechenden Gelenkmitteln 10, 10' beschränkt, sondern grundsätzlich beliebig erweiterbar, um insbesondere großflächige, schwere Wirkelemente 3 sicher nachzuführen.

Außerdem unterliegt die Erfindung keinerlei Einschränkungen hinsichtlich der eingesetzten Motor- und Verbindungsmittel. Beispielsweise sieht eine andere, nicht explizit dargestellte Ausgestaltung der Erfindung vor, dass die Motormittel anstelle von Reibrädern oder Spulen geeignete Zahnräder aufweisen, welche zu Bewegungszwecken mit kettenartig ausgebildeten Verbindungsmitteln zusammenwirken, um diese zum Bewegen der Trägermittel geeignet hin und her zu bewegen.

Gemeinsam ist allen gezeigten und beschriebenen Ausgestaltungen eine besonders einfache Ausgestaltung sowohl der Gelenk- als auch der Bewegungsmittel, um auf diese Weise eine kostengünstige Nachführung mit entsprechend gesteigertem Wirkungsgrad zu ermöglichen. Optimal ist hierbei die Kombination aus elastischen Gelenkmitteln, die als Rückstellmittel fungieren, zusammen mit biegeschlaffen Verbindungsmitteln.

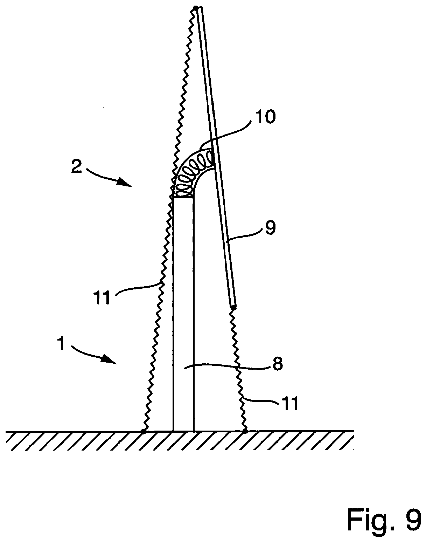

Figur 9 zeigt schematisch eine Ausgestaltung der Energiegewinnungseinrichtung 1 bzw. einer Nachführvorrichtung 2, bei der gleiche Bezugszeichen gleiche oder zumindest gleichwirkende Elemente bezeichnen, wie in den vorangehenden Figuren.

Gemäß Figur 9 ist das gezeigte Gelenkmittel 10 speziell und ohne Beschränkung als Schraubenfeder ausgebildet, die am oberen Ende der pfostenartigen Aufstellmittel 8 angeordnet ist. Die Trägermittel 9 sind in einer Stellung gezeigt, in der sie um fast 90° gegenüber der Horizontalen geneigt sind. Dies kann in nachteiliger Weise zu einer sehr hohen Beanspruchung des elastischen Gelenkelements 10 führen; außerdem werden die Trägermittel 9 durch das hohe Eigen-/Nutzlast-Gewicht in der gezeigten Stellung vertikal sehr instabil.

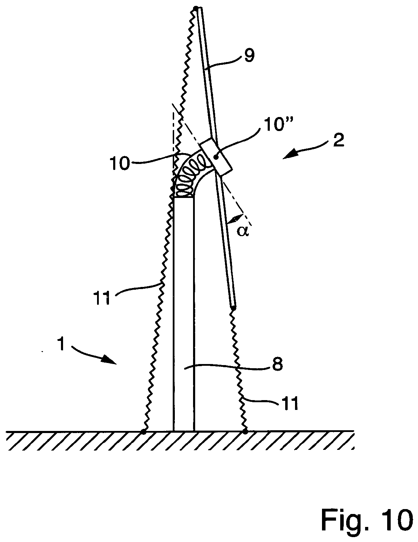

Um diesbezüglich Abhilfe zu schaffen, sieht eine erfindungsgemäße Ausgestaltung der Energiegewinnungseinrichtung 1 bzw. der Nachführvorrichtung 2 gemäß Figur 10 vor, anstelle des in Figur 9 gezeigten einfachen elastischen Gelenkelements 10 ein sogenanntes Kombigelenk zu realisieren, welches zusätzlich zu dem bereits erwähnten elastischen Gelenkelement 10, welches wiederum als Schraubenfeder ausgebildet sein kann, noch ein sogenanntes klassisches Gelenk 10" vorsieht, bei dem es sich beispielsweise um ein Kreuzgelenk (Kreuzlager) oder ein Kugelgelenk (sphärisches Lager) handeln kann.

Gemäß der Ausgestaltung in Figur 10 ist das klassische Gelenk 10" am distalen Ende des elastischen Gelenkelements 10 angeordnet. Wie die Darstellung in Figur 10 zeigt, ist es auf diese Weise zum Erreichen der gezeigten Verschwenkung der Trägermittel 9 um beinahe 90° gegenüber der Horizontalen nicht länger erforderlich, das elastische Gelenkelement 10 möglicherweise übermäßig zu beanspruchen. Gemäß der Darstellung in Figur 10 bewirkt die Verformung des elastischen Gelenkelements 10 lediglich eine Verschwenkung der Trägermittel 9 um einen Winkel α, der beispielsweise etwa 45° betragen kann. Die weitere Verschwenkung resultiert aus dem Vorhandensein des klassischen Gelenks 10", wodurch das elastische Gelenkelement 10 weniger stark beansprucht wird als in Figur 9.

Wie der Fachmann leicht erkennt, ist die Realisierung des beispielhaft anhand von Figur 10 erläuterten Kombigelenks nicht auf die spezielle gezeigte Anordnung von Schraubenfeder 10 und klassischem Gelenk 10" beschränkt. Beispielsweise könnte auch das klassische Gelenk 10" unmittelbar an den pfostenartigen Aufstellmitteln 8 angeordnet und das elastische Gelenkelement 10 entsprechend nachgeschaltet sein. Auch das Vorsehen von mehr als einem elastischen Gelenkelement 10 und/oder mehr als einem klassischen Gelenk 10" ist möglich. Hierbei können auch verschiedene Arten von klassischen Gelenken 10" Verwendung finden.

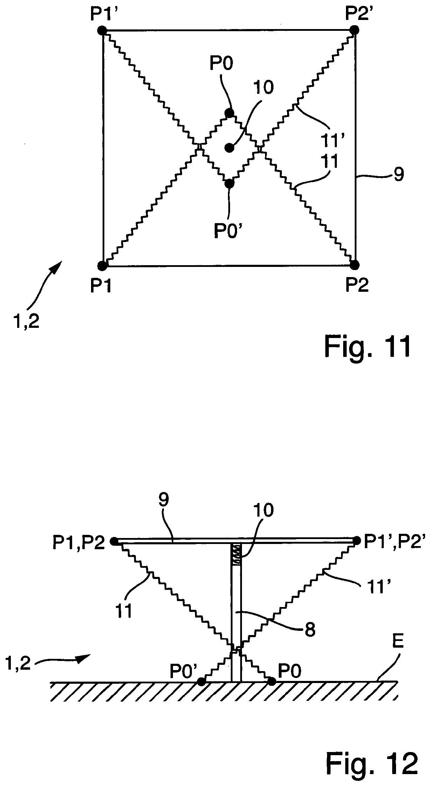

Figur 11 zeigt in einer Ansicht von unten - etwa entsprechend der Darstellung in Figur 4 oder Figur 6 - eine Ausgestaltung der Energiegewinnungseinrichtung 1 bzw. Nachführvorrichtung 2, bei der eine Anzahl über Kreuz angeordneter Verbindungsmittel 11, 11' vorgesehen ist. Gezeigt ist ein Blick von unten auf die Trägermittel 9, wobei Bezugszeichen 10 wiederum den Ort des wenigstens einen elastischen Gelenkelements angibt. Die Verbindungsmittel 11, 11' sind in den Punkten P1, P2 bzw. P1', P2' an den Trägermitteln 9 befestigt. Sie erstrecken sich von den genannten Befestigungspunkten P1, P2 bzw. P1', P2' zu jeweils einem gemeinsamen Befestigungspunkt, der mit den Bezugszeichen P0 bzw. P0' bezeichnet ist. Dieser letztgenannte Befestigungspunkt P0, P0' befindet sich gemäß der Seitenansicht in Figur 12 beispielsweise am Erdboden E oder einer anderen ortsfesten Struktur. Wesentlich hierbei ist, dass sich der Punkt P0 näher bei den Punkten P1', P2' befindet als bei den Punkten P1, P2. Gleiches gilt umgekehrt für den Punkt P0'. Auf diese Weise laufen die gezeigten Verbindungsmittel 11, 11' über Kreuz, was eine Drehstabilität in der Ebene des Trägers bzw. der Trägermittel 9 vergrößert.

Die mit den Verbindungsmitteln 11, 11' in Wirkverbindung stehenden Motormittel zum Bewegen der Trägermittel 9 sind in den Figuren 11 und 12 aus Gründen der Übersichtlichkeit nicht eingezeichnet.

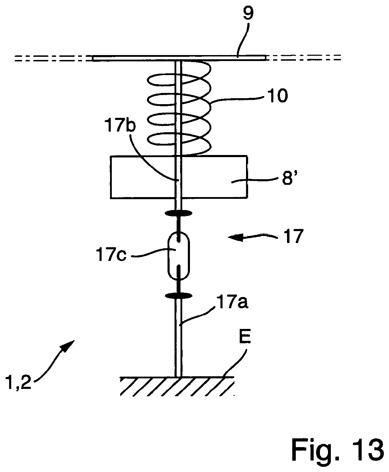

In Figur 13 ist schematisch dargestellt, wie sich die Federwirkung des wiederum speziell und ohne Beschränkung als Schraubenfeder ausgebildeten elastischen

Gelenkelements 10 gezielt einstellen bzw. dosieren lässt. Zu diesem Zweck ist ein Vorspannmittel 17 vorgesehen, welches beispielsweise in der gezeigten Art und Weise ausgebildet sein kann:
Das Vorspannmittel 17 umfasst zwei Teile 17a, 17b, von denen der erste 17a - ohne Beschränkung - am Erdboden E oder einer anderen geeigneten Struktur befestigt ist. Der zweite Teil 17b ist an den Trägermitteln 9 befestigt und kann sich speziell durch das elastische Gelenkelement 10 hindurch erstrecken, insbesondere wenn dieses - wie in Figur 13 gezeigt - als Schraubenfeder ausgebildet ist. Die freien Enden der Teile 17a, 17b sind mittels einer geeigneten Spanneinrichtung 17c verbunden, um auf diese Weise die Vorspannmittel 17 zu realisieren, mit deren Hilfe sich (durch Betätigung der Spanneinrichtung 17c) eine Vorspannung des elastischen Gelenkelements 10 gezielt beeinflussen lässt, um dessen Federwirkung einzustellen bzw. zu dosieren. Bezugszeichen 8' bezeichnet in diesem Zusammenhang ein geeignetes Widerlager für das elastische Gelenkelement 10, um die gewünschte Vorspannung aufbauen zu können. Das Widerlager 8' kann insbesondere - jedoch ohne Beschränkung - Bestandteil der Aufstellmittel sein, die in Figur 13 nicht weiter bezeichnet sind. Im Zuge einer speziellen Ausgestaltung der Energiegewinnungseinrichtung 1 bzw. Nachführvorrichtung 2 kann beispielsweise vorgesehen sein, dass sich das Vorspannmittel 17 im Wesentlichen vollständig im Inneren der pfostenartigen Aufstellmittel 8 (in Figur 13 nicht gezeigt) befindet. Das Widerlager 8' kann dann am oberen Ende der genannten Aufstellmittel angeordnet sein.

Gemäß Figur 13 ist die Spanneinrichtung 17c in an sich bekannter Weise ausgebildet und ermöglicht eine Verringerung des Abstandes zwischen den Teilen 17a und 17b der Vorspannmittel 17 durch eine einfache Schraubbewegung. Die Erfindung ist jedoch keinesfalls auf eine solche Ausgestaltung der Spanneinrichtung beschränkt, wie der Fachmann leicht erkennt.

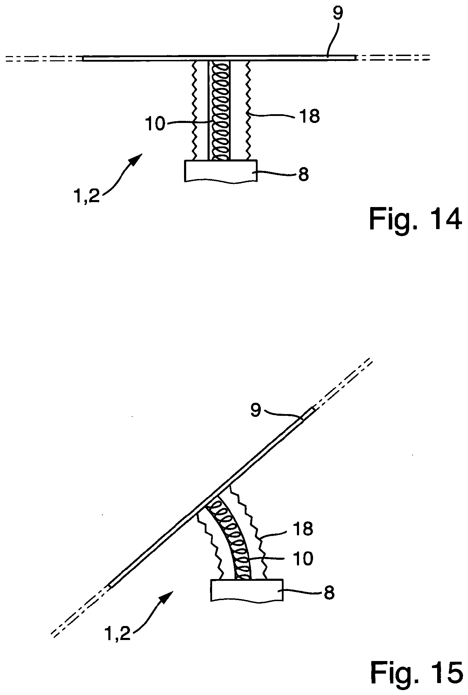

Figur 14 zeigt schematisch eine spezielle Weiterbildung der Energiegewinnungseinrichtung 1 bzw. Nachführvorrichtung 2, bei der zusätzlich zu dem wiederum speziell als Schraubenfeder ausgebildeten elastischen Gelenkelement 10 am oberen Ende der pfostenartigen Aufstellmittel 8 noch ein Schutzelement oder Stabilisierungselement 18 vorhanden ist, welches das elastische Gelenkelement 10 nach Art eines Faltenbalgs (Akkordeon) umgibt. Das Schutzelement 18 soll verhindern, dass die Trägermittel 9 eine Drehung um die Längsachse des elastischen Gelenkelements 10 (Torsionsbewegung) vollführen. Auf diese Weise lässt sich die Stabilität der Gesamtanordnung und somit auch die Lebenserwartung des elastischen Gelenkelements 10 vergrößern. Zusätzlich schützt das Schutzelement 18 auch das elastische Gelenkelement 10 vor äußeren Schadeinflüssen, da es das elastische Gelenkelement 10 gemäß den Schnittansichten in Figur 14 und 15 vollumfänglich umgibt. Dabei überbrückt das Schutzelement 18 den Raum zwischen dem Ende der pfostenartigen Aufstellmittel 8 und den Trägermitteln 9, wie gezeigt.

Konkrete Realisierungen des Schutzelements 18 sich nicht auf die in den Figuren 14 und 15 exemplarische gezeigte Bauform beschränkt. Grundsätzlich kann jede Art von Schutzelement Verwendung finden, die dazu geeignet ist, die beschriebene Drehung um die Längsachse des elastischen Gelenkelements 10 wirksam zu verhindern.

Darüber hinaus ist die Verwendung des beschriebenen Schutzelements nicht auf Anordnungen beschränkt, die ausschließlich ein elastisches Gelenkelement 10 als Gelenkmittel aufweisen. Insbesondere auch bei der Ausgestaltung gemäß Figur 10, die zusätzlich noch ein klassisches Gelenk 10" umfasst, kann ein solches Schutzelement Verwendung finden.

Dabei ist es grundsätzlich möglich, dass das Schutzelement sowohl das erste Gelenkelement 10 als auch das klassische Gelenk 10" schützend umgibt. Es liegt jedoch auch im Rahmen der Erfindung, dass nur eines der genannten Gelenkmittel von dem Schutzelement umgeben ist bzw. geschützt wird.

Wie der Fachmann noch erkennt, kann bei einer äußerst bevorzugten Ausgestaltung der erfindungsgemäßen Energiegewinnungseinrichtung 1 bzw. Nachführvorrichtung 2 vorgesehen sein, dass diese alle anhand der Figuren 10 bis 15 erläuterten Merkmalskomplexe in beliebigen Kombinationen umfasst. Insbesondere liegt eine Ausgestaltung im Rahmen der Erfindung, bei der zusätzlich zu dem beschriebenen Kombigelenk auch ein Schutzelement, ein Vorspannmittel und ein Überkreuz-Verlauf der Verbindungsmittel Verwendung findet.

Auf diese Weise ist es möglich, mit relativ einfachen Mitteln eine flexibel und dauerhaft einsetzbare Anordnung zu realisieren.

## Patentansprüche

1. Nachführvorrichtung (2, 2', 2") für photovoltaische und solarthermische Wirkelemente (3) oder dergleichen, umfassend:
Aufstellmittel (8, 8"), welche dazu ausgebildet sind, wenigstens ein derartiges Wirkelement (3) beabstandet vom einem Untergrund oder einer Oberfläche anzuordnen, und welche pfostenartig ausgebildet sind;
über Gelenkmittel (10, 10') gelenkig mit den Aufstellmitteln (8, 8') verbundene Trägermittel (9) für das Wirkelement (3), wobei die Gelenkmittel (10, 10') an einem oberen Ende (8a) der pfostenartigen Aufstellmittel (8, 8') angeordnet sind; und
Bewegungsmittel, welche dazu ausgebildet sind, die Trägermittel (9) relativ zu den Aufstellmitteln (8, 8') zu bewegen, vorzugsweise zu verschwenken, und welche wenigstens ein Verbindungsmittel (11, 11') sowie auf das Verbindungsmittel einwirkende Motormittel (13) umfassen, welches Verbindungsmittel (11, 11') in wenigstens einem Befestigungspunkt (P1, P2, P1', P2') auf einer den Aufstellmitteln (8, 8') zugewandten Seite (9a) der Trägermittel (9) an den Trägermitteln fixiert ist, wobei die Motormittel (13) zum Verändern eines Abstands zwischen den Aufstellmitteln (8, 8') und dem Befestigungspunkt (P1, P2, P1', P2') auf das Verbindungsmittel (11, 11') einwirken, welche Gelenkmittel (10, 10') wenigstens ein Gelenkelement umfassen, welches Gelenkelement elastisch, vorzugsweise als Elastomerelement, als Stahl- oder Elastomerfeder, als Gummigelenk oder dergleichen ausgebildet ist,
**dadurch gekennzeichnet, dass**
die Gelenkmittel zusätzlich zu dem wenigstens einen elastischen Gelenkelement (10) ein klassisches Gelenk (10") in Form eines Kreuz-, Dreh- oder Kugelgelenks umfassen.

2. Nachführvorrichtung (2, 2', 2") nach Anspruch 1,
**dadurch gekennzeichnet, dass**
das Verbindungsmittel (11, 11') als biegeschlaffes Verbindungsmittel, vorzugsweise als Stahlseil, Kette oder dergleichen, ausgebildet ist.

3. Nachführvorrichtung (2, 2', 2") nach Anspruch 1 oder 2,
**dadurch gekennzeichnet, dass**
die Motormittel (13) ausgebildet sind zum Aufrollen oder Abrollen eines Endes des Verbindungsmittels (11, 11') oder zum Verkürzen/Verlängern des Verbindungsmittels.

4. Nachführvorrichtung (2, 2', 2") nach mindestens einem der Ansprüche 1 bis 3,
**dadurch gekennzeichnet, dass**
wenigstens zwei Verbindungsmittel (11, 11') vorgesehen sind, die sich in ihrer Projektion auf eine Ebene der Trägermittel (9) unter einem Winkel zueinander erstrecken, welcher Winkel vorzugsweise im Wesentlichen 90° beträgt, und dass die Motormittel (13) entsprechend zum Einwirken auf wenigstens zwei Verbindungsmittel ausgebildet sind, vorzugsweise durch Vorsehen einer entsprechenden Mehrzahl an Motoreinheiten (14).

5. Nachführvorrichtung (2) nach Anspruch 4,
**dadurch gekennzeichnet, dass**
die wenigstens zwei Verbindungsmittel (11, 11') derart an den Trägermitteln (9) angeordnet sind, dass sie sich in ihrer Projektion auf die Ebene der Trägermittel (9) kreuzen.

6. Nachführvorrichtung (2, 2', 2") nach mindestens einem der Ansprüche 1 bis 5,
**dadurch gekennzeichnet, dass**
die Motormittel (13) ausgebildet sind zum Vorbeibewegen des Verbindungsmittels oder der Verbindungsmittel (11, 11') an einem Ort der Motormittel (13) oder der jeweiligen Motoreinheit (14), wobei die Motormittel (13) weiterhin dazu ausgebildet sind, das oder die Verbindungsmittel (11, 11') gegen ein durch die Trägermittel (9) und/oder die Gelenkmittel (10, 10') ausgeübtes Kippmoment festzulegen.

7. Nachführvorrichtung (2, 2', 2") nach mindestens einem der Ansprüche 1 bis 6,
**dadurch gekennzeichnet, dass**
die Aufstellmittel (8, 8') jeweils eine Führung (12, 12') für das oder die Verbindungsmittel (11, 11') aufweisen, vorzugsweise in Form einer Öffnung oder eines Durchbruchs in den Aufstellmitteln, höchst vorzugsweise mit endständiger Querschnitterweiterung (12b).

8. Nachführvorrichtung (2, 2', 2") nach Anspruch 7,
**dadurch gekennzeichnet, dass**
das oder die Verbindungsmittel (11, 11') durch die betreffende Führung (12, 12') durchgeführt und in einem jeweiligen zweiten Befestigungspunkt (P2, P2') mit den Trägermitteln (9) verbunden ist bzw. sind.

9. Nachführvorrichtung (2") nach mindestens einem der Ansprüche 1 bis 8,
**dadurch gekennzeichnet, dass**
die Gelenkmittel (10, 10') eine Mehrzahl an Gelenkelementen aufweisen, vorzugsweise in linearer oder kreisförmiger Anordnung, wobei vorzugsweise wenigstens eine gleiche Mehrzahl an Verbindungsmitteln (11, 11') vorgesehen sind, welche mehreren Verbindungsmittel höchst vorzugsweise parallel zueinander angeordnet sind.

10. Nachführvorrichtung (2) nach mindestens einem der Ansprüche 1 bis 9,
**dadurch gekennzeichnet, dass**
in Wirkverbindung mit dem wenigstens einen elastischen Gelenkelement (10) ein Vorspannmittel (17) vorgesehen ist, welches Vorspannmittel (17) dazu ausgebildet ist, eine Federwirkung des wenigstens einen elastischen Gelenkelements gezielt einzustellen.

11. Nachführvorrichtung (2) nach mindestens einem der Ansprüche 1 bis 10,
**dadurch gekennzeichnet, dass**
zumindest das wenigstens eine elastische Gelenkelement (10) mit wenigstens einem Schutzelement (18), vorzugsweise einem das wenigstens eine elastische Gelenkelement (10) umgebenden Schutzelement (18), höchst vorzugsweise einem Balg, zusammenwirkt, welches Schutzelement (18) dazu ausbildet und angeordnet ist, eine Drehung der Trägermittel (9) um eine Längsachse der Gelenkmittel, vorzugsweise des wenigstens einen elastischen Gelenkelements (10), zu verhindern.

12. Nachführvorrichtung (2, 2', 2") nach mindestens einem der Ansprüche 1 bis 11, **dadurch gekennzeichnet, dass**
die Trägermittel (9) als rückseitige Stützstruktur für das Wirkelement (3) ausgebildet sind, vorzugsweise als Trägerplatte oder als Tragrahmen.

13. Nachführvorrichtung (2, 2', 2") nach mindestens einem der Ansprüche 1 bis 12, **dadurch gekennzeichnet, dass**
die Motormittel (13) elektrisch betreibbar sind, vorzugsweise unabhängig von einem Netzanschluss.

14. Nachführvorrichtung (2, 2', 2") nach mindestens einem der Ansprüche 1 bis 13,
**gekennzeichnet durch**
eine Steuereinheit (16) für die Motormittel (13), vorzugsweise eine programmtechnisch eingerichtete Steuereinheit, welche höchst vorzugsweise dazu ausgebildet ist, die Trägermittel (9) kalendarisch und/oder mit Hilfe von weiteren Sensoren, insbesondere Lichtsensoren, Beschleunigungssensoren oder Gyroskopen bestimmt nach dem Sonnenstand auszurichten.

15. Solare Energiegewinnungseinrichtung (1, 1') mit einer Nachführvorrichtung (2, 2', 2") gemäß einem der Ansprüche 1 bis 14 und mit wenigstens einem photovoltaischen oder solarthermischen Wirkelement (3), welches Wirkelement über die Trägermittel (9) mit der restlichen Nachführvorrichtung verbunden ist.

## Claims

1. Tracking device (2, 2', 2") for photovoltaic and solar thermal active elements (3) or the like, comprising:
erecting means (8, 8"), which are configured for arranging at least one such active element (3) spaced apart from a substrate or from a surface and which are of post-like construction;
supporting means (9) for the active element (3), which supporting means are articulatedly connected to the erecting means (8, 8') by means of joint means (10, 10'), the joint means (10, 10') being arranged at an upper end (8a) of the post-like erecting means (8, 8'); and
movement means, which are configured for moving, preferably pivoting, the supporting means (9) relative to the erecting means (8, 8'), and which comprise at least one connecting means (11, 11') as well as motor means (13) acting on the connecting means, which connecting means (11, 11') is fixed to the supporting means at at least one attachment point (P1, P2, P1', P2') on a side (9a) of the supporting means (9) facing towards the erecting means (8, 8'), the motor means (13) acting on the connecting means (11, 11') to alter a spacing between the erecting means (8, 8'), and the attachment point (P1, P2, P1', P2'), which joint means (10, 10') comprise at least one joint element, which joint element is configured so as to be resilient, preferably as an elastomeric element, as a steel or elastomeric spring, as a rubber joint or the like,
**characterised in that**
the joint means comprise, in addition to the at least one resilient joint element (10), a conventional joint (10") in the form of a universal joint, pivot joint or ball joint.

2. Tracking device (2, 2', 2") according to claim 1,
**characterised in that**
the connecting means (11, 11') is configured as a flexible connecting means, preferably in the form of a steel cable, chain or the like.

3. Tracking device (2, 2', 2") according to claim 1 or 2,
**characterised in that**
the motor means (13) are configured for rolling or unrolling an end of the connecting means (11, 11') or for shortening/lengthening the connecting means.

4. Tracking device (2, 2', 2") according to at least one of claims 1 to 3,
**characterised in that**
at least two connecting means (11, 11') are provided which extend at an angle to one another in their projection onto a plane of the supporting means (9), which angle is preferably substantially 90°, and the motor means (13) are accordingly configured for acting on at least two connecting means, preferably by provision of a corresponding plurality of motor units (14).

5. Tracking device (2) according to claim 4,
**characterised in that**
the at least two connecting means (11, 11') are arranged on the supporting means (9) in such a way that they intersect in their projection onto the plane of the supporting means (9).

6. Tracking device (2, 2', 2") according to at least one of claims 1 to 5,
**characterised in that**
the motor means (13) are configured for moving the connecting means (11, 11') past a location of the motor means (13) or the respective motor unit (14), the motor means (13) further being configured for fixing the connecting means (11, 11') against a tilting moment exerted by the supporting means (9) and/or by the joint means (10, 10').

7. Tracking device (2, 2', 2") according to at least one of claims 1 to 6,
**characterised in that**
the erecting means (8, 8') each have a guide (12, 12') for the connecting means (11, 11'), preferably in the form of an opening or a hole in the erecting means, most preferably having a terminal portion of widened cross-section (12b).

8. Tracking device (2, 2', 2") according to claim 7,
**characterised in that**
the connecting means (11, 11') is/are passed through the relevant guide (12, 12') and is/are connected to the supporting means (9) at a respective second attachment point (P2, P2').

9. Tracking device (2") according to at least one of claims 1 to 8,
**characterised in that**
the joint means (10, 10') have a plurality of joint elements, preferably in a linear or circular arrangement, there preferably being provided at least the same plurality of connecting means (11, 11'), which plurality of connecting means are most preferably arranged parallel to one another.

10. Tracking device (2) according to at least one of claims 1 to 9,
**characterised in that**
a biasing means (17) is provided in operative connection with the at least one resilient joint element (10), which biasing means (17) is configured for purposively establishing a resilient action of the at least one resilient joint element.

11. Tracking device (2) according to at least one of claims 1 to 10,
**characterised in that**
at least the at least one resilient joint element (10) co-operates with at least one protecting element (18), preferably a protecting element (18) that surrounds the at least one resilient joint element (10), most preferably a bellows, which protecting element (18) is configured and arranged for preventing rotation of the supporting means (9) about a longitudinal axis of the joint means, preferably of the at least one resilient joint element (10).

12. Tracking device (2, 2', 2") according to at least one of claims 1 to 11,
**characterised in that**
the supporting means (9) are in the form of a rear-side support structure for the active element (3), preferably in the form of a support plate or in the form of a support frame.

13. Tracking device (2, 2', 2") according to at least one of claims 1 to 12,
**characterised in that**
the motor means (13) are electrically operable, preferably independently of a mains connection.

14. Tracking device (2, 2', 2") according to at least one of claims 1 to 13,
**characterised by**
a control unit (16) for the motor means (13), preferably a programmed control unit, which is most preferably configured for aligning the supporting means (9) in accordance with the calendar and/or with the aid of further sensors, especially light sensors, acceleration sensors or gyroscopes, according to the position of the sun.

15. Solar energy generation apparatus (1, 1') having a tracking device (2, 2', 2") according to any one of claims 1 to 14 and having at least one photovoltaic or solar thermal active element (3), which active element is connected to the remainder of the tracking device by way of the supporting means (9).

## Revendications

1. Dispositif de suivi (2, 2', 2") pour des éléments actifs photovoltaïques et héliothermiques (3) ou analogues, comprenant :
des moyens de montage (8, 8") qui sont conçus pour disposer au moins un tel élément actif (3) à distance d'un sol ou d'une surface et qui sont réalisés en forme de poteaux ;
des moyens de support (9) pour l'élément actif (3), reliés de façon articulée aux moyens de montage (8, 8") par des moyens d'articulation (10, 10'), les moyens d'articulation (10, 10') étant disposés à une extrémité supérieure (8a) des moyens de montage (8, 8') en forme de poteaux ; et
des moyens de déplacement qui sont conçus pour déplacer, de préférence faire pivoter, les moyens de support (9) par rapport aux moyens de montage (8, 8') et qui comprennent au moins un moyen de liaison (11, 11') et des moyens moteurs (13) agissant sur le moyen de liaison, lequel moyen de liaison (11, 11') est fixé aux moyens de support en au moins un point de fixation (P1, P2, P1', P2') sur un côté (9a) des moyens de support (9) tourné vers les moyens de montage (8, 8'), les moyens moteurs (13) agissent sur le moyen de liaison (11, 11') pour faire varier une distance entre les moyens de montage (8, 8') et le point de fixation (P1, P2, P1', P2'), lesquels moyens d'articulation (10, 10') comprennent au moins un élément d'articulation, lequel élément d'articulation est conçu élastique, de préférence sous la forme d'un élément en élastomère, d'un ressort en acier ou en élastomère, d'une articulation en caoutchouc ou analogue,
**caractérisé en ce que**
les moyens d'articulation comprennent, en plus dudit au moins un élément d'articulation élastique (10), une articulation classique (10") sous la forme d'une articulation à croisillon, d'une articulation tournante ou d'une articulation sphérique.

2. Dispositif de suivi (2, 2', 2") selon la revendication 1,
**caractérisé en ce que** le moyen de liaison (11, 11') est réalisé sous la forme d'un moyen de liaison souple en flexion, de préférence sous la forme d'un câble en acier, d'une chaîne ou analogue.

3. Dispositif de suivi (2, 2', 2") selon la revendication 1 ou 2,
**caractérisé en ce que** les moyens moteurs (13) sont conçus pour enrouler ou dérouler une extrémité du moyen de liaison (11, 11') ou pour raccourcir/rallonger le moyen de liaison.

4. Dispositif de suivi (2, 2', 2") selon au moins l'une des revendications 1 à 3,
**caractérisé en ce qu'**au moins deux moyens de liaison (11, 11') sont prévus, qui, dans leur projection sur un plan des moyens de support (9) s'étendent en faisant un angle entre eux, lequel angle est de préférence sensiblement égal à 90°, et que les moyens moteurs (13) sont conçus d'une manière appropriée pour agir sur au moins deux moyens de liaison, de préférence par le fait qu'un nombre correspondant d'unités motrices (14) est prévu.

5. Dispositif de suivi (2) selon la revendication 4,
**caractérisé en ce que** lesdits au moins deux moyens de liaison (11, 11') sont disposés sur les moyens de support (9) de façon qu'ils se croisent dans leur projection sur le plan des moyens de support (9).

6. Dispositif de suivi (2, 2', 2") selon au moins l'une des revendications 1 à 5,
**caractérisé en ce que** les moyens moteurs (13) sont conçus pour faire passer le moyen de liaison ou les moyens de liaison (11, 11') devant un emplacement des moyens moteurs (13) ou de l'unité motrice (14) respective, les moyens moteurs (13) étant en outre conçus pour maintenir le ou les moyen(s) de liaison (11, 11') contre un couple de renversement exercé par les moyens de support (9) et/ou les moyens d'articulation (10, 10').

7. Dispositif de suivi (2, 2', 2") selon au moins l'une des revendications 1 à 6,
**caractérisé en ce que** les moyens de montage (8, 8') présentent chacun un guidage (12, 12') pour le ou les moyens de liaison (11, 11'), de préférence sous la forme d'une ouverture ou d'une percée dans les moyens de montage, le plus préférentiellement avec élargissement de section transversale au bout (12b).

8. Dispositif de suivi (2, 2', 2") selon la revendication 7,
**caractérisé en ce que** le ou les moyens de liaison (11, 11') est/sont passé(s) à travers le guidage (12, 12') concerné et relié(s) aux moyens de support (9) en un deuxième point de fixation (P2, P2') respectif.

9. Dispositif de suivi (2") selon au moins l'une des revendications 1 à 8,
**caractérisé en ce que** les moyens d'articulation (10, 10') présentent une pluralité d'éléments d'articulation, de préférence dans une disposition linéaire ou circulaire, de préférence au moins une pluralité égale de moyens de liaison (11, 11') étant prévus, lesquels plusieurs moyens de liaison sont le plus préférentiellement disposés parallèlement les uns aux autres.

10. Dispositif de suivi (2) selon au moins l'une des revendications 1 à 9,
**caractérisé en ce qu'**un moyen de précontrainte (17) en liaison fonctionnelle avec ledit au moins un élément d'articulation élastique (10) est prévu, lequel moyen de précontrainte (17) est conçu pour régler de manière ciblée un effet de ressort dudit au moins un élément d'articulation élastique.

11. Dispositif de suivi (2) selon au moins l'une des revendications 1 à 10,
**caractérisé en ce qu'**au moins ledit au moins un élément d'articulation élastique (10) coopère avec au moins un élément de protection (18), de préférence un élément de protection (18) entourant ledit au moins un élément d'articulation élastique (10), le plus préférentiellement un soufflet, lequel élément de protection (18) est conçu et disposé pour empêcher une rotation des moyens de support (9) autour d'un axe longitudinal des moyens d'articulation, de préférence dudit au moins un élément d'articulation élastique (10).

12. Dispositif de suivi (2, 2', 2") selon au moins l'une des revendications 1 à 11,
**caractérisé en ce que** les moyens de support (9) sont réalisés sous la forme d'une structure d'appui arrière pour l'élément actif (3), de préférence sous la forme d'une plaque de support ou d'un cadre de support.

13. Dispositif de suivi (2, 2', 2") selon au moins l'une des revendications 1 à 12,
**caractérisé en ce que** les moyens moteurs (13) peuvent fonctionner électriquement, de préférence indépendamment d'un raccordement au réseau.

14. Dispositif de suivi (2, 2', 2") selon au moins l'une des revendications 1 à 13,
**caractérisé par** une unité de commande (16) pour les moyens moteurs (13), de préférence une unité de commande programmable, laquelle est le plus préférentiellement conçue pour orienter les moyens de support (9) d'après le calendrier et/ou à l'aide d'autres capteurs, en particulier des capteurs de lumière, des capteurs d'accélération ou des gyroscopes, de façon précise en fonction de la position du soleil.

15. Système de production d'énergie solaire (1, 1') pourvu d'un dispositif de suivi (2, 2', 2") selon l'une des revendications 1 à 14 et d'au moins un élément actif photovoltaïque ou héliothermique (3), lequel élément actif est relié au reste du dispositif de suivi par les moyens de support (9).
